# EUROPEAN PATENT SPECIFICATION

(11) **EP 2 247 845 B1**
(45) Date of publication and mention of the grant of the patent: **02.01.2013**
(21) Application number: 08870538.9
(22) Date of filing: 23.12.2008
(51) Int. Cl.: F02M 21/02

(54) **SYSTEM FOR SEALED CONNECTION BETWEEN TUBULAR SECTIONS, IN PARTICULAR FOR THE SEALED CONNECTION OF A PIPE FOR FEEDING COMBUSTIBLE GAS AT HIGH PRESSURE WITH A PRESSURE REDUCER IN AUTOMOTIVE INTERNAL COMBUSTION MACHINES.**
SYSTEM ZUR ABGEDICHTETEN VERBINDUNG ZWISCHEN ROHRABSCHNITTEN, INSBESONDERE ZUR ABGEDICHTETEN VERBINDUNG EINES ROHRS ZUR ZUFUHR VON BRENNGAS AUF HOHEM DRUCK MIT EINEM DRUCKMINDERER IN KRAFTFAHRZEUG-BRENNKRAFTMASCHINEN
SYSTÈME DE RACCORD SCELLÉ ENTRE SECTIONS TUBULAIRES, EN PARTICULIER POUR RACCORD SCELLÉ POUR TUYAU DÉLIVRANT DU GAZ COMBUSTIBLE À HAUTE PRESSION MUNI D'UN DÉTENDEUR DANS DES MACHINES À COMBUSTION INTERNE POUR AUTOMOBILE

(30) Priority: 10.01.2008 IT PD20080009
(43) Date of publication of application: 10.11.2010
(73) Proprietor: Lovato Gas S.p.A., 36100 Vicenza (IT)
(72) Inventor: GRANDO, Maurizio, I-30100 Ghirignago (VE) (IT); GRITTI, Guido, I-35121 Padova (IT); CELESTI, Salvatore, I-31037 Ramon di Loria (TV) (IT)
(74) Representative: Fabris, Stefano
(86) International application number: PCT/IT2008/000788
(87) International publication number: WO 2009/087699

(56) References cited:
- WO-A-2005/060433
- DE-A1- 10 104 149
- FR-A- 1 080 178

## Description

### Technical field

The present invention concerns a system for sealed connection between tubular sections having the characteristics mentioned in the preamble of the main claim No. 1.

### Technological background

The present invention lends itself particularly, although not exclusively, to application in gastight connection systems of pipes for feeding combustible gas in feed systems of automotive internal combustion engines. In such applications there is a need to connect in a sealed manner the feed pipe for the combustible gas, fed from a suitable tank, to the pressure reducer of the feed system, the pipe then being subjected, in operation, to high pressure. By reason of the plant engineering which distinguishes such feed systems, the aforesaid pipe typically needs to have a relative orientation with respect to the connecting means of the reducer such as to make it possible, at the site of connection, to obtain a preselected relative positioning with respect to the reducer, and once that positioning has been achieved to ensure relative locking with a gastight seal. In general, the feed pipe has at the end a connecting means or union elbow which provides relative angulation between the tubular portion for nesting in the reducer and the pipe.

The currently known solutions provide for a system for connection between the end sections of the gas feed pipe and for entry into the reducer, wherein the sealing means act between the parts in question only when the tubular sections are rigidly locked to each other in the preselected relative angular positioning. Generally, a screw-type locking means is provided for clamping a gasket, for example a sealing ring, and at the same time for securing the tubular sections rigidly to each other as a result of the clamping thereof.

A limitation encountered with such a solution is that the gastight seal cannot be obtained in the state in which the tubular sections are freely orientable with respect to each other, i.e. in the state in which there is no involvement of the screw-type locking means.

In this regard, since the gastight seal, between the gas feed connector and the inlet of the reducer, can be obtained only at the site of installation of the equipment, the testing of the seal has to take place in that phase, without it therefore being able to be carried out and ensured at the site of production of the individual components, independently of the following installation phase, such a prerogative proving difficult to accept, and contrasting in particular with the safety and testing standards required for high pressure pipes in the technical field of automotive gas equipment. Moreover, the aforesaid known solution, although on the one hand it ensures mutual locking of the coupled sections, on the other hand it does not prove to be particularly rapid and flexible, not permitting free orientation with simultaneous gastight sealing in the mutual positioning of the coupled tubular sections.

In other technical fields, not specifically directed to the sealed connection of a pipe for feeding combustible gas at high pressure with a pressure reducer in automotive internal combustion machines, there are known connection systems permitting free orientation in the mutual positioning of the coupled tubular sections.

WO2005/06043 discloses a quick release mechanism for attaching a pair of conduits, such as hoses or similar flexible pipes. Said swivel connection permits fluid communication between the coupled conduits, providing free rotation therebetween. In this case a rigid connection between the coupled conduits has to be prevented in order to rapidly allow unfettered deployment of the conduits.

DE 10104149 discloses a system for sealed connection a pair of tubular section between a gas line and a gas meter device or pressure reducer device. The connection system permits free orientation with simultaneous gastight sealing in the mutual positioning of the coupled tubular sections, but no locking means are disclosed for rigidly locking the tubular sections to each other in a preselected relative positioning.

### Description of the invention

The problem underlying the present invention is that of providing a sealed connection system structurally and functionally designed so as to remedy the limitations mentioned with reference to the prior art cited.

This problem is solved by the invention by means of a sealed connection system produced according to the following claims.

### Brief description of the drawings

Further characteristics and advantages of the invention will become clearer from the following detailed description of a preferred exemplary embodiment thereof, illustrated by way of non-limiting example with reference to the appended drawings, in which:

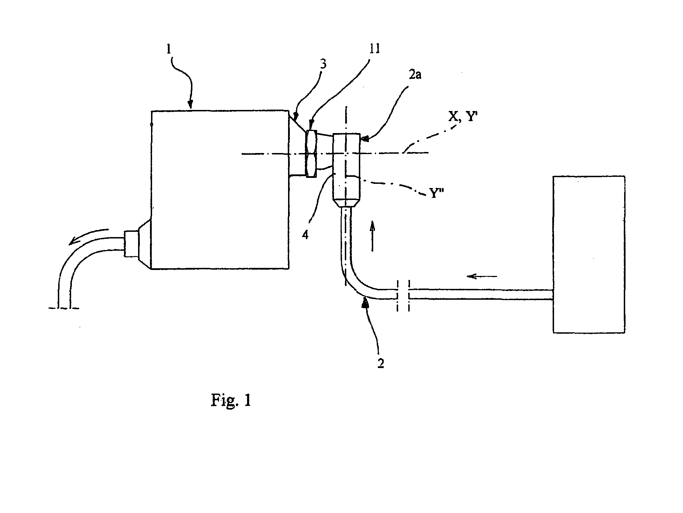

- Figure 1 is a schematic view of a connection system according to the invention, between a pressure reducer and a pipe for feeding gas to the reducer itself,
- Figures 2 and 3 are partial views from the top and from the side, of a detail of the connection system of Figure 1,
- Figure 4 is a view in section along the line IV-IV of Figure 2,
- Figures 5 and 6 are views in section respectively along the lines V-V and VI-VI of Figure 3,

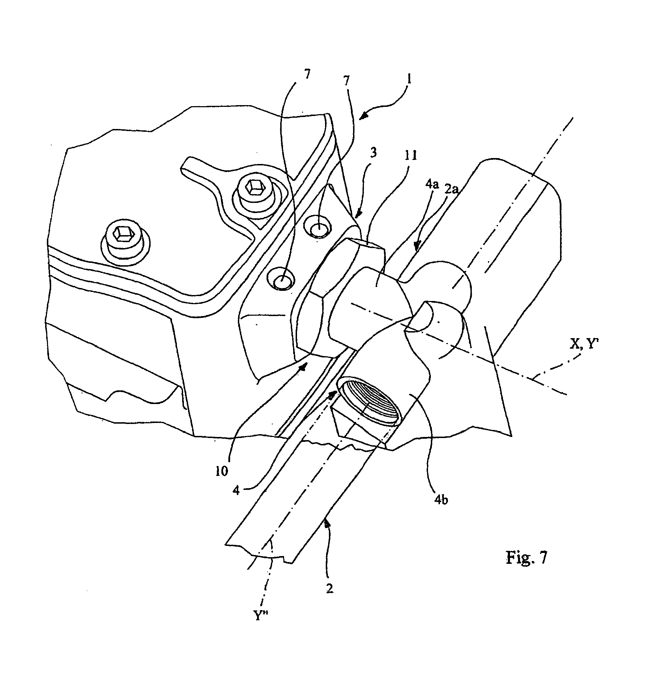

- Figure 7 is a partial perspective view of the connection system of the preceding Figures.

### Preferred embodiments of the invention

With reference to the drawings mentioned, the reference 1 indicates a pressure reducing device, shown only schematically, arranged to be connected to a pipe 2 for feeding a combustible gas, at high pressure, also shown only partially, according to a sealed connection system produced according to the present invention.

The invention finds a particular; although not exclusive, application in the connection of the inlet sections of reducers with high pressure pipes intended for feed systems for combustible gases in internal combustion engines, such as, for example, LPG or methane. It is to be understood that such an application represents a preferred choice, the connection system according to the invention equally being applicable, in more general terms, to any condition in which a sealed connection is required between two tubular sections of a pipe for conveying a fluid under pressure.

The connection system provides for a tubular section 3 protruding from the body of the reducer, and defining the inlet section for the high pressure gas conveyed by the pipe 2. In the section 3 a tabular portion is formed, comprising a seat with a cylindrical axial bore 3a, capable of being engaged, in an axial nesting coupling, by a corresponding tubular end section 2a of the pipe 2. The seat 3a extends axially in a direction indicated by X in the drawings.

The tubular section 2a extends in a first portion 4a of a attachment member (connector) 4, which is extended in a second tubular portion 4b of the member, the first and the second portion being angled with respect to each other. Y' and Y" respectively indicate the axial directions, incident with each other, in which the first and the second portions 4a, 4b extend. A preferred angulation between the directions Y' and Y" is 90°.

In more detail, the pipe 2 is connected at one of its ends to the inlet of the connecting portion 4b, such that the outlet section of the connector (defined in the other portion 4a), capable of sealed connection with the reducer, is angled with respect to the inlet section, this configuration being typically preferred, in plant engineering applications of the aforesaid type. As a consequence, following the coupling with axial nesting between the sections 2a, 3 (with axes X and Y' coaxial) the connector 4 is freely orientable about the axis X, until a preselected relative positioning between the pipe 2 and the reducer 1 is obtained.

Returning to the section 2a, this has a tubular portion having in its outer cylindrical wall a transverse groove 5, extending circumferentially, which is capable of co-operating with a pair of respective slots 6 provided in the axial bore of the seat 3a, by means of the intervention of axial checking means, suitable for axially locking the section 2a with respect to the section 3, as result of the mutual axial nesting.

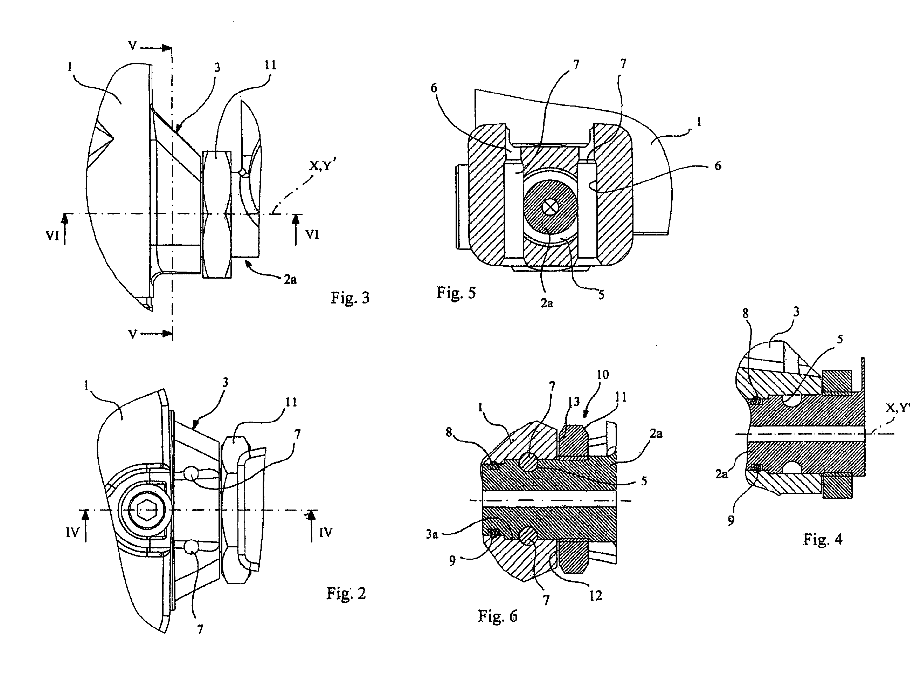

Said axial checking means comprise a pair or cylidrical pin-type members, both indicated by 7, which are arranged to be set into the section 3, on diametrically opposed sides, such that each pin 7 engages, in part, the corresponding slot 6, remaining held in the section 3, and protrudes inside the seat 3a, engaging part of the corresponding facing groove 5 provided in the section 2. Owing to the mutual arrangement of the cylindrical pins 7, parallel to each other and arranged on diametrically opposed sides (at the generating lines of the cylindrical seat 3a), as a result of the engagement of the pins in the corresponding slots and in the groove, the tubular sections 2a and 3 remain mutually held with respect to each other in the axial direction X, with the possibility of free relative rotation between the sections about the axial direction X of nesting. This configuration is clearly illustrated in Figure 6.

In such a condition the gastight seal between the coupled sections is also ensured by means of a sealing ring 8, for example of the O-ring type, interposed between the coupling cylindrical surfaces of the tubular sections 2a, 3. For example, a circumferential recess 9 may be provided on the outer wall of the section 2a, suitable for forming a seat for housing the sealing ring 8, which is brought into relative sliding contact with the cylindrical wall, facing it, of the section 3, once the axial coupling phase is completed. It should be noted that the sealing system is designed to ensure a seal between surfaces in relative rotation, and the sections 2a and 3 may have free relative orientation about the axis X.

For relative locking between the tubular sections 2a, 3, in the preselected positioning, the system comprises locking means, indicated as a whole by 10, which are structurally and functionally independent of the axial checking means described above.

Said locking means comprise a ring nut or screw nut 11, screwed onto an externally threaded part of the connector portion 4a. The ring nut has at one of its ends a lateral surface 12 capable of abutting against a corresponding surface shoulder 13 provided at the end of the tubular portion of the section 3. As shown in Figure 6, the screwing of the ring nut 11 onto the section 2a brings the surfaces 12 and 13 into mutual abutment, placing the section 2a under tension with respect to the portion 3, so as to ensure, owing to the tensions induced by the screwing of the ring nut, relative locking between the connector 4 (and therefore the pipe 2) and the reducer 1, in the preselected relative positioning previously reached.

The invention thus solves the problem posed, providing numerous advantageous compared with the known solutions.

The principal advantage lies in the fact that, owing to the connection system of the invention, the gastight seal between the connector and the reducer is ensured even in the state of free relative orientability between them. This entails the advantage of being able to ensure and test the seal between the coupled sections already at the site of production, irrespective of the installation conditions, but at the same time facilitating installation owing to the free relative orientability of the sections.

There should further be added thereto the rapidity and ease of sealed coupling (and uncoupling) between the reducer and the pipe, which can be of particular value in the phase of assembly (disassembly) on site by the installer.

A further advantage lies in the relative orientability between the reducer and the feed pipe (while ensuring mutual gastight axial retention), which facilitates the installation of the equipment by increasing the flexibility of layout thereof.

## Claims

1. A system for sealed connection between a pair of tubular sections (3, 2a) intended to convey a gaseous fluid under pressure, for the sealed connection of a pipe for feeding combustible gas at high pressure with a pressure reducer in automotive internal combustion machines, wherein the sections are capable of relative orientation from and towards a preselected positioning at which they are rigidly connected to each other with a sealed connection, the system comprising:
- nesting coupling means, respectively provided on one and the other of said tubular sections (3, 2a) coaxially engageable with each other,
- gastight sealing means between said tubular sections,
- axial checking means (6, 7) between said nesting coupling means for retaining one of the tubular sections relative to the other section in the direction of mutual axial coupling (X), **characterized in that**:
- said system comprises removable locking means (10) between the sections for rigidly locking said tubular sections to each other in the state of the preselected relative positioning, **in that**
- said means for locking the relative orientation between the sections are independent of said axial checking means (6, 7), such that the gastight seal is ensured in the state in which the tubular sections (3, 2a) are freely orientable with respect to each other without any action of the locking means (10), and **in that**
- said locking means comprise a ring nut or locking nut (11), screwed onto one of the sections and capable of abutting against the other section as a result of the screwing operation, so as to secure said sections (3, 2a) rigidly to each other.

2. A sealed connection system according to claim 1, wherein said coupling means comprise a tubular portion in one (2a) of said sections having a transverse groove (5) in its outer wall, the portion being capable of being received in a seat (3a) defined in the other section (3), said checking means comprising at least one checking member (7) held axially with respect to the seat and extending for at least some distance into said seat (3a) in an arrangement such as to engage the groove (5) when the tubular portion is received in the seat so as to lock the tubular sections (3, 2a) axially to each other, with a possibility of free relative rotation between the sections about the axial nesting direction (X).

3. A system according to claim 2, wherein said at least one axial checking member (7) is removably engageable in said seat.

4. A system according to claim 2 or 3, wherein two checking members in the shape of a cylindrical pin (7) are provided, capable of engaging said seat (3a) transversely to the axial nesting direction and on diametrically opposed sides of the groove (5), so as to hold one tubular section axially in the other but to permit the free relative rotation thereof about the axial nesting direction (X).

5. A system according to any one of the preceding claims, wherein one (3) of said tubular sections is the inlet section of a pressure reducer (1) and the other section (2a) is part of an end connector (4) of a pipe (2) for feeding gas to the reducer, wherein said connector comprises tubular portions (4a, 4b) angled with respect to each other.

6. A system according to claim 5, wherein said pressure reducer (1) is intended to be fed with gas at high pressure in a system for feeding combustible gas to automotive internal combustion engines.

7. A system according to any one of the preceding claims, wherein said sealing means comprise a sealing ring (8), of the O-ring type, housed in a recess (9) provided on one (2a) of said sections and capable of sliding surface contact on the other section (3), by the effect of the free relative orientability between said sections.

## Patentansprüche

1. Vorrichtung zur dichtschließenden Verbindung zweier röhrenartiger Abschnitte (3,2a) zum Transport eines gasförmigen Fluids unter Druck, zur dichtschließenden Verbindung einer Leitung zum Zuführen von entzündlichem Gas unter hohem Druck mit einem Druckminderer in einer Automobil-Brennkraftmaschine, wobei die Abschnitte in der Lage sind eine relative Ausrichtung von und zu einer vorgewählten Position einzunehmen, in welcher sie dichtschließend starr miteinander verbunden sind, wobei die Vorrichtung umfasst:
Steckverbindungsmittel, die jeweils an der einen und der anderen Seite der röhrenartigen Abschnitte (3,2a) zur koaxialen Verbindung miteinander angebracht sind,
gasdichte Dichtungsmittel zwischen den röhrenartigen Abschnitten,
axiale Haltemittel (6,7) zwischen den Steckverbindungsmitteln zur Beibehaltung der Ausrichtung der beiden Abschnitte zueinander in Richtung der gegenseitigen axialen Verbindung (X),
***dadurch gekennzeichnet, dass***
die Vorrichtung lösbare Feststellmittel (10) zwischen den Abschnitten zum starren Verbinden der röhrenartigen Abschnitte miteinander im Zustand der vorgewählten relativen Ausrichtung umfasst, dass
die Mittel zum Feststellen der relativen Ausrichtung zwischen den Abschnitten unabhängig von den axialen Haltemitteln (6,7) sind, so dass die gasdichte Dichtung in dem Zustand abgesichert ist, in dem die röhrenartigen Abschnitte (3,2a) in Bezug zueinander, ohne jede Beeinflussung durch die Feststellmittel (10), frei ausrichtbar sind, und dass
die Feststellmittel eine Ringmutter oder eine Feststellmutter (11) umfassen, welche auf einen der Abschnitte geschraubt ist und dazu in der Lage ist, als Ergebnis eines Schraubvorgangs an den anderen Abschnitt anzuschließen, um die Abschnitte (3,2a) starr gegeneinander zu sichern.

2. Vorrichtung zur dichtschließenden Verbindung nach Anspruch 1, wobei die Verbindungsmittel ein röhrenartiges Teilstück in einem der genannten Abschnitte (2a) umfassen, das eine transversale Rille (5) an seiner Außenwand hat, wobei das röhrenartiges Teilstück in der Lage ist, in einer definierten Aufnahme (3a) des anderen Abschnittes (3) aufgenommen zu werden, wobei die Haltemittel mindesten ein Halteelement (7) umfassen, welches axial in Bezug auf die Aufnahme gehalten ist und sich zumindest ein wenig in die Aufnahme (3a) erstreckt, um in die Rille (5) einzugreifen, wenn das röhrenartige Teilstück in die Aufnahme aufgenommen ist, um die röhrenartigen Abschnitte (3, 2a) axial zueinander zu halten, wobei eine Möglichkeit einer freien relativen Drehung zwischen den Abschnitten um die axiale Verbindungsrichtung (X) besteht.

3. Vorrichtung nach Anspruch 2, wobei mindestens ein axiales Halteelement (7) in der Aufnahme lösbar in Eingriff zu bringen ist.

4. Vorrichtung nach Anspruch 2 oder 3, wobei zwei haltende Elemente in Form eines zylindrischen Stifts (7) vorgesehen sind, die in der Lage sind in die Aufnahme (3a) transversal zur axialen Steckrichtung und auf diametral gegenüberliegenden Seiten der Rille (5) einzugreifen, um einen röhrenartigen Abschnitt im anderen zu halten, aber eine freie relative Drehung in der axialen Steckrichtung (X) erlauben.

5. Vorrichtung nach einem der vorhergehenden Ansprüche, wobei einer (3) der röhrenartigen Abschnitte der Einlassabschnitt eines Druckminderers (1) und der andere Abschnitt (2a) Teil einer Abschlussverbindung (4) eines Rohrs (2) zur Versorgung des Druckminderers mit Gas ist, wobei der Stecker röhrenartige Teilabschnitte (4a, 4b) umfasst, die gegeneinander abgewinkelt sind.

6. Vorrichtung nach Anspruch 5, wobei der Druckminderer (1) dazu vorgesehen ist, in einem System zur Versorgung von Automobil-Brennkraftmaschinen mit entzündlichem Gas, mit unter hohem Druck stehenden Gas versorgt zu werden.

7. Vorrichtung nach einem der vorhergehenden Ansprüche, wobei die Dichtungsmittel einen Dichtungsring (8) in Form eines O-Ringes umfassen, der in einer Aussparung (9) untergebracht ist, die an einem (2a) der Abschnitte bereitgestellt ist, und in der Lage ist, einen Gleitoberflächenkontakt zum anderen Abschnitt (3) durch die freie relative Ausrichtung zwischen den Abschnitten zu ermöglichen.

## Revendications

1. Système pour établir une connexion scellée entre une paire de sections tubulaires (3, 2a) destinées à transporter un fluide gazeux sous pression, pour une connexion scellée d'un tube destiné à alimenter un gaz combustible sous haute pression avec un réducteur de pression dans des moteurs à combustion interne automobiles, dans lequel les sections sont capables d'adopter une orientation relative depuis un positionnement présélectionné et vers celui-ci, dans lequel elles sont connectées rigidement l'une à l'autre avec une connexion scellée, le système comprenant :
- des moyens d'accouplement à nichage, prévus sur l'une et sur l'autre desdites sections tubulaires (3, 2a) susceptibles d'être engagés coaxialement l'un avec l'autre,
- des moyens de scellement étanches aux gaz entre lesdites sections tubulaires,
- des moyens de contrôle axial (6, 7) entre lesdits moyens d'accouplement à nichage pour retenir l'une des sections tubulaires par rapport à l'autre section dans la direction d'accouplement axial mutuel (X), **caractérisé en ce que** :
- ledit système comprend des moyens de blocage amovibles (10) entre les sections pour bloquer rigidement lesdites sections tubulaires l'une à l'autre dans l'état de positionnement relatif présélectionné, **en ce que**
- lesdits moyens pour bloquer l'orientation relative entre les sections sont indépendants desdits moyens de contrôle axial (6, 7), de sorte que le scellement étanche aux gaz est assuré dans l'état dans lequel les sections tubulaires (3, 2a) sont librement orientables l'une par rapport à l'autre sans aucune action des moyens de blocage (10), et **en ce que**
- lesdits moyens de blocage comprennent un écrou annulaire ou écrou de blocage (11), vissé sur l'une des sections et capable de venir buter contre l'autre section en résultat de l'opération de vissage, de manière à fixer lesdites sections (3, 2a) rigidement l'une à l'autre.

2. Système de connexion scellée selon la revendication 1, dans lequel lesdits moyens d'accouplement comprennent une portion tubulaire dans l'une (2a) desdites sections ayant une gorge transversale (5) dans sa paroi extérieure, la portion étant capable d'être reçue dans un siège (3a) défini dans l'autre section (3), lesdits moyens de contrôle comprenant au moins un élément de contrôle (7) tenu axialement par rapport au siège et s'étendant au moins sur une certaine distance jusque dans ledit siège (3a) dans un agencement tel qu'il engage la gorge (5) quand la portion tubulaire est reçue dans le siège, de manière à bloquer les sections tubulaires (3, 2a) axialement l'une à l'autre, avec une possibilité de rotation relative libre entre les sections autour de la direction de nichage axial (X).

3. Système selon la revendication 2, dans lequel ledit au moins un élément de contrôle axial (7) est susceptible d'être engagé de manière amovible dans ledit siège.

4. Système selon la revendication 2 ou 3, dans lequel il est prévu deux éléments de contrôle sous la forme d'une tige cylindrique (7), capable d'engager ledit siège (3a) transversalement à la direction de nichage axial et sur des côtés diamétralement opposés de la gorge (5), de manière à tenir une section tubulaire axialement dans l'autre, mais à permettre la rotation relative libre de celle-ci autour de la direction de nichage axial (X).

5. Système selon l'une quelconque des revendications précédentes, dans lequel l'une (3) desdites sections tubulaires est la section d'entrée d'un réducteur de pression (1) et l'autre section (2a) fait partie d'un connecteur terminal (4) d'un tube (2) pour alimenter du gaz au réducteur, dans lequel ledit connecteur comprend des portions tubulaires (4a, 4b) en angle l'une par rapport à l'autre.

6. Système selon la revendication 5, dans lequel ledit réducteur de pression (1) est destiné à être alimenté avec du gaz sous pression dans un système pour alimenter un gaz combustible à des moteurs à combustion interne automobiles.

7. Système selon l'une quelconque des revendications précédentes, dans lequel lesdits moyens de scellement comprennent une bague de scellement (8), du type joint torique, logée dans un évidement (9) prévu sur l'une (2a) desdites sections et capable de venir en contact de surface glissant sur l'autre section (3), sous l'effet de la possibilité d'orientation relative libre entre lesdites sections.
